Europäisches Patentamt

European Patent Office

Office européen des brevets

(19)

(11) Publication number: **0 032 594**
**B1**

(12) **EUROPEAN PATENT SPECIFICATION**

(45) Date of publication of patent specification: **25.07.84**

(21) Application number: **80108254.6**

(22) Date of filing: **30.12.80**

(51) Int. Cl.³: **C 03 C 3/06,**
**C 03 B 37/025,**
**C 03 C 13/00**

(54) **Method for producing silica glass.**

(30) Priority: **21.01.80 JP 4600/80**

(43) Date of publication of application:
**29.07.81 Bulletin 81/30**

(45) Publication of the grant of the patent:
**25.07.84 Bulletin 84/30**

(84) Designated Contracting States:
**DE FR GB NL**

(56) References cited:
**FR - A - 2 418 775**
**FR - A - 2 466 802**

(73) Proprietor: **Hitachi, Ltd.**
**5-1, Marunouchi 1-chome**
**Chiyoda-ku Tokyo 100 (JP)**

(72) Inventor: **Susa, Kenzo**
**2196-81, Hirai Hinodemachi**
**Nishitama-gun Tokyo (JP)**
Inventor: **Matsuyama, Iwao**
**1125-5, Aihara**
**Sagamihara-shi Kanagawa-ken (JP)**
Inventor: **Satoh, Shin**
**2-12-6-201, Kasuga-cho**
**Iruma-shi Saitama-ken (JP)**
Inventor: **Suganuma, Tsuneo**
**5-17-5, Nakaarai**
**Tokorozawa-shi Saitama-ken (JP)**

(74) Representative: **Strehl, Peter, Dipl.-Ing. et al,**
**Strehl, Schübel-Hopf, Schulz Patentanwälte**
**Widenmayerstrasse 17 Postfach 22 03 45**
**D-8000 München 22 (DE)**

Courier Press, Leamington Spa, England.

## Description

This invention relates to a method for producing silica glass, particularly silica glass for optical instruments such as optical fiber, by heat-treating porous silica glass, particularly silica gel obtained through the hydrolytic reaction of a liquid starting material.

Hereunder, the background of this invention will be described by taking the case of optical fibers as an example.

Optical fibers are used as the media of various kinds of optical transmission ranging from the optical transmission over very short distances in a gastro-camera fiberscope etc. to the optical transmission over long distances in optical communication systems. They are mainly made of high-silica glass of high purity (if necessary, a dopant for adjusting the refractive index is contained).

As methods for producing such optical fibers, there have heretofore been known (i) a method in which a starting material is molten in a crucible and is turned into fiber, (ii) a method in which a high-silica glass film is formed on the inner wall of a silica tube by the CVD process (Chemical Vapor Deposition Process), the tube is collapsed, and the resultant rod is drawn out at a high temperature into fiber, (iii) a method in which glass soot is prepared by the CVD process, it is piled up and thereafter sintered, and the sintered compact is drawn out at a high temperature into fiber, and so forth.

These prior art methods, however, are disadvantageous as stated below. In the case (i), it is difficult to obtain glass having a high silica composition, and the purification of the starting material is difficult besides the inevitable contamination from the crucible, so that an optical fiber of high purity is hard to attain. In the case (ii), the mass-producibility is low, a large-sized mother rod is difficult to prepare, and multicomponent glass (glass containing a considerable amount of Na) cannot be produced. Moreover, since a thermal oxidation reaction is utilized, the yield is low when P, Ge, B or the like is used as a dopant element. In addition, the manufacturing equipment is expensive. Also in the case (iii), multicomponent glass cannot be produced, the mass-producibility is low, and the manufacturing equipment is expensive. Besides, in any of the cases (i), (ii) and (iii), a glass body in any desired shape cannot be formed. Further, since both the methods (ii) and (iii) produce silicon oxide via the high temperature state and the method (i) melts glass sufficiently at a high temperature, a high cost is ordinarily unavoidable.

On the other hand, a method capable of producing porous glass at a temperature which is not very high is known. This method is such that alkoxysilanes, or alkoxysilanes to which alkoxides being desired additive elements are added are hydrolyzed to obtain silica gels, or high-silica gels containing the additive oxides.

Further, it has been disclosed that the porous glass made from the silica gel obtained through the hydrolysis of the alkoxysilane has its temperature raised gradually and is heated at 1,000°C or above in an oxidizing atmosphere, thereby to perform processes such as desorption of water, removal of residual organic substances and sintering, so as to turn the porous glass into dense glass (refer to, for example, the official gazette of Japanese Patent Application Laid-open Specification No. 51—34219 and M. Yamane et al.; Journal of Materials Science, vol. 14 (1979), pages 607—611). With such a method, the eleimination of the difficulties of the prior art methods (i), (ii) and (iii) mentioned above is expected.

However, dense glass produced by heating the porous glass often has formed bubbles when heated at a high temperature of or above 1,300°C in order to work it. Accordingly, the usage of such glass is extremely limited. In case of manufacturing an optical fiber by employing as a mother rod the high-silica glass produced by the above method, when the mother rod is heated to a high temperature in order to turn it into fiber, it forms bubbles and is often incapable of providing the optical fiber.

Such bubble formation at high temperature is considered to be caused by residual water or residual OH groups existent in the sintered silica glass or by any other gas component.

As a method which effectively removes the residual water of the porous high-silica glass, there has been known a method in which the glass is exposed to a chlorine-containing atmosphere at a high temperature of 600°C—1,000°C and is thereafter sintered at 1,200°C—1,300°C (refer to the official gazette of Japanese Patent Application Publication No. 42—23036).

According to the inventors' experimental study, with this method, the bubble formation in the case of working the porous glass at the high temperature decreased remarkably but could not be entirely prevented. At high temperatures of or above 1,300°C, bubble formation was often noted.

The following references are cited to show the state of the art; i) Official gazette of Japanese Patent Application Publication Specification No. 42—23036, ii) Official gazette of Japanese Patent Application Laid-open Specification No. 51—34219, iii) Official gazette of Japanese Patent Application Laid-open Specification No. 53—137086 and iv) M. Yamane et al.: Journal of Materials Science, vol. 14 (1979), pages 607—611.

Summary of the invention

An object of this invention is to eliminate the difficulty of the prior art in the high-temperature working of high-silica glass obtained through the sintering of porous silica glass, and to provide a method for producing silica glass which does not form bubbles even at high temperatures. A further object is to provide a method for readily producing silica glass which does not form bubbles even at high temperatures. A still further object is to provide a method for readily producing a high-silica glass material to serve as a mother rod for an optical fiber, from a dry silica gel.

In order to accomplish the objects, a method for producing silica glass according to this invention comprises i) the step of heating a silica material made of a dry silica gel and raising its temperature to approximately 250°C so as to remove adsorbed water, ii) the step of heating the silica material with the water desorbed and raising its temperature to approximately 700°C in an oxidizing atmosphere so as to remove carbon, iii) the step of heating the silica material with the carbon removed and raising its temperature from approximately 700°C to a value within a range of approximately 1,000°C—approx. 1,050°C in an atmosphere containing at least 1% (volumetric-%, and the same applies hereinbelow) of $Cl_2$, chloride gas or a gas adapted to generate $Cl_2$ upon thermal decomposition, so as to remove hydroxyl groups, iv) the step of heating the silica material with the hydroxyl groups removed to a temperature of approximatley 1,000°C—approx. 1,100°C in an atmosphere containing at least 1 vol.% of oxygen and holding said silica material at a predetermined temperature for at most 2 hours so as to remove chlorine, and v) the step of heating the silica material with the chlorine removed to a temperature of approximately 1,050°C—approximately 1,300°C in He or vacuum and holding said silica material at a predetermined temperature chosen within said temperature range from about 1,050°C to about 1,300°C for at most 1 hour so as to sinter it.

Detailed description of the invention

It is desirable that the heating in the step i) is carried out at a temperature raising rate of 20°C/hr.—300°C/hr. and that the heating at near 100°C is especially at a low rate (at or below 50°C/hr.). If necessary, the silica material is held at near 100°C for at most 1 hour. The atmosphere in this step may be an oxidizing gas such as $O_2$ and air, an inert or neutral gas such as Ar, He and $N_2$, or vacuum, and the atmosphere gas should preferably be of high purity. More desirably, the temperature raising rate is made 20°C/hr.—200°C/hr., and the silica material is held at near 100°C for 30 minutes—1 hour. Especially in case of employing the dry gel which has been stored in the air for a long time, the silica material needs to be held at approximately 100°C for a fixed time. However, this is unnecessary in case of employing a gel having little adsorbed water. The atmosphere should more desirably be $O_2$ in relation to the atmosphere in the step ii). The best result is obtained in such a way that a gel having been stored in an oven or dryer at 70°C—100°C has its temperature raised to 250°C at a temperature raising rate of 100°C/hr.—200°C/hr. In this case, the holding at approximately 100°C is substituted by the storage at 70°C—100°C. When the temperature raising rate exceeds the range specified above, unfavorably the dry gel is more liable to crack. On the other hand, when it is below the range, the required period of heating time is long, which is uneconomical. The reason why the holding of the silica material at near 100°C is effective is that during the temperature rise, the desorption of water is especially intensified at near 100°C. Since the desorption of water at near 100°C reduces after 1 hour or so, the temperature is further raised in order to effect further desorption of water. The atmosphere in the step i) is made the oxidizing, inert or neutral gas having as low an $H_2O$ content as possible. This tends to prevent the re-adsorption of moisture and to promote water removal.

Methods for producing the dry gel for use in the step i) are described in detail in pending Japanese Patent Applications. The methods are outlined as comprising 1) the step of adding water to an alkoxysilane expressed by a general formula $Si(OR)_4$ (where R denotes an alkyl group) and further adding alcohol to form a sol (the mixed solution becomes a sol with the lapse of time, but here the mixed solution before becoming the sol shall also be included in the concept "sol"), 2) the step of putting the sol into a vessel having a predetermined shape, 3) the step of letting the vessel stand and hydrolyzing the sol into a gel, and 4) the step of slowly drying the gel into the dry gel.

In the step 1), it is sometimes the case that an acid is added in order to promote the reaction and that an alkali is added in order to increase the porosity of the gel. When silica glass doped with anoxide is to be produced as, for example, in the case where glass having a refractive index different from that of pure silica is desired, the material $Si(OR)_4$ in the step 1) is replaced with $Si(OR)_4$ to which an alkoxide of a desired dopant element is added. Desirably, the temperature of the gelation in the step 3) is 10—120°C, and the drying temperature in the step 4) is 50—120°C. The drying speed in the step 4) is set so that the rate at which the weight decreases may become at most 40%/day. The dry gel to be used in the step i) is not restricted to those produced by the manufacturing methods described above, but it may be produced by any method. The treatment in the step i) is to remove water adsorbed in the pores of the dry gel, and it can therefore be called the "water desorption treatment".

The treatment in the step ii) is to remove organic substances remaining in the gel and carbon produced by the decomposition thereof. Since the substances are finally removed in the form of oxides of carbon, the treatment is termed the "carbon removal treatment". As the decarbonization effect appears in a temperature range of 250°C—700°C, the heating temperature is raised up to 700°C. The temperature raising rate is made 20°C/hr.—600°C/hr., more preferably 30°C/hr.—300°C/hr. If necessary, the silica material is held at approximately 700°C for at most 1 hour. The atmosphere is in oxidizing atmosphere, which is usually pure oxygen, an inert or neutral gas containing at least 1% of oxygen, air or the like. This atmosphere may contain $H_2O$ as well. When the temperature raising rate is above the aforecited range, unfavorably the tendency of the silica material toward cracking increases, whereas when it is below the range, uneconomically a long heating time is required. The holding of the silica material at near 700°C for a fixed time is intended to effect the removal of the residual organic substances and the decomposition products thereof more perfectly, and it may be omitted in many cases. More desirable as the atmosphere is pure oxygen, or a high-purity inert or neutral gas containing at least 1% of oxygen, for example, He containing oxygen. This is for further reducing the adsorbates. As the diameter of the pores in the silica material is greater, the rate of removing the impurities is higher, and hence, the temperature raising rate can be made higher.

The treatment in the step iii) is for sufficiently removing $H_2O$ or hydroxyl groups still remaining in the silica material having undergone the steps i) and ii), thereby to prevent the bubble formation due to the remaining water at high temperatures, and it is called the "hydroxyl group removal treatment". In the case where the produced silica glass is turned into fiber so as to form an optical fiber for communication systems, the removal of the hydroxyl groups by the step iii) is remarkably contributive to the reduction of transmission loss. The temperature raising rate in this step is 30°C/hr.—100°C/hr., more preferably 50°C/hr.—60°C/hr. The atmosphere is a gas containing at least 1% of $Cl_2$, and a chloride gas, for example, $SiCl_4$ may well be used instead of $Cl_2$. It is also possible to replace $Cl_2$ with a gas adapted to generate $Cl_2$ upon thermal decomposition, for example, $SOCl_3$ and $CCl_4$. As the gas to be mixed, there can employed an inert or neutral gas, oxygen or the like. A more preferable atmosphere is $O_2$ gas containing 5—50% of $Cl_2$. When the temperature raising rate is above the aforecited range, unfavorably the OH removal becomes nonuniform between the central part and the peripheral part of the silica material and the tendency toward cracking increases. On the other hand, when it is below the aforecited range, unecomically a long time is required for the heating. When the content of $Cl_2$ in the atmosphere is less than 1%, a satisfactory effect of removing the hydroxyl groups cannot be expected. The atmosphere may be pure chlorine as well. The lower limit of the temperature range of the hydroxyl group removal treatment by the chlorine-containing atmosphere is approximately 700°C. The atmosphere is caused to contain chlorine at approximately 700°C, and thereafter has its temperature raised at a predetermined temperature raising rate. The temperature at which the present treatment is completed is 1,000—1,050°C, preferably 1,000°C. Even when the atmosphere contains chlorine at temperatures below approximately 700°C, the effect of removing the hydroxyl groups is scanty, and at temperatures above 1,050°C, the amount of chlorine contained in the silica material becomes excessive and the silica material is liable to crack, so that both the temperatures above and below the specified range are unfavorable. The silica material is held in the chlorine-containing atmosphere at 700—1,050°C for at most about 2 hours at least once as may be needed. By holding at the predetermined temperature it is intended that the whole silica material will have the hydroxyl groups removed uniformly at the holding temperature. Usually, when the holding time exceeds about 2 hours, the tendency to lower the hydroxyl group content in the silica material becomes saturated, and hence, it is uneconomical to set the holding time at above about 2 hours. The time in which the saturation begins is somewhat different depending upon the size, properties etc. of the gel. When the silica material is held at about 900°C for 1—2 hours and is further held at 1,000°C for 1—2 hours, a more favorable result is obtained.

As stated before, it has been the actual situation that even when the porous silica material is exposed to the chlorine-containing atmosphere at a high temperature and has the hydroxyl groups or water removed sufficiently, the silica glass obtained by sintering the treated silica material at 1,200—1,300°C forms bubbles at high temperatures of or above 1,300°C in many cases. For the purpose of preventing the unfavorable bubble formation, in the method for producing silica glass according to this invention, the step of heat-treating the silica material is an atmosphere containing oxygen (the step iv)) is inserted between the step iii) and the sintering step (the step v)) so as to prevent the unfavorable bubble formation. As the result of the inventors' experimental study, it has been revealed that the bubbles formed when the silica glass heat-treated in the chlorine-containing atmosphere to remove the hydroxyl groups as in the step iii) is heated to or above 1,300°C are made of a gas whose principal constituent is $SiCl_4$. Regarding this, it is considered that Cl will have been substituted for the OH groups in the hydroxyl group removal step and that the bonds of Si—Cl will have developed in large numbers. Accordingly, the reason why the bubble formation is prevented by the insertion of the step iv) is that the chlorine-based gas forming the cause for the bubble formation is driven out from the silica material by heat-treating the material in the oxidizing atmosphere at a temperature of or above 1,000°C. Thus, the step iv) can be called the "chlorine removal treatment", which is a step not seen in the prior arts at all.

In the step iv), the atmosphere contains at least 1% of oxygen gas (ordinarily $O_2$, but $O_3$ may well be used). As a gas to be mixed, an inert or neutral gas is usually used, and it should not contain water. A more preferable atmosphere is He containing at least 5% of oxygen, or pure oxygen. When the oxygen content is less than 1%, unfavorably the chlorine removing effect is insufficient. Although a gas containing water is effective for the chlorine removal treatment, the hydroxyl group content in the silica material increases because OH groups are substituted for Cl. The heat-treating temperature in the step iv) is 1,000—1,100°C, more preferably 1,050—1,100°C, and the period of time for which the silica material is held at a predetermined temperature is at most about 2 hours, more preferably 1—2 hours. When the heat-treating temperature is below approximately 1,000°C, the chlorine removing effect is scanty. The chlorine removing effect is higher at a higher heat-treating temperature. However, when the chlorine removal treatment is conducted at a temperature above the transition point of glass, unfavorably oxygen gas is confined in closed pores and causes the bubble formation. Therefore, the upper limit of the heat-treating temperature has been made 1,100°C. Usually, when the holding time is in excess of about 2 hours, the chlorine removal effect exhibits a tendency to saturation, and hence, it is uneconomical that the holding time exceeds about 2 hours. The time in which the saturation begins is somewhat different depending upon the size, properties etc. of the gel. When, in the step iv), it is necessary to raise the temperature, the temperature raising rate is made 50°C/hr.—100°C/hr. When the temperature raising rate is above the range, unfavorably cracks are liable to occur in the silica material, whereas when it is below the range, uneconomically a long heating time is required.

The step v) is a treatment which collapses the pores of the porous silica material and sinters the material. The treating temperature is 1,050—1,300°C. The atmosphere is He most favorably, but the step v) may be effected under vacuum as well. The period of time for which the silica material is held at a predetermined temperature is at most about 1 hour. When, in this step, it is necessary to raise the temperature, it is executed at a rate of 50—100°C/hr., preferably substantially 50°C/hr. An appropriate treating temperature or the upper limit of treating temperatures varies depending upon the size of the pores of the particular silica material, and as the pores are larger the appropriate treating temperature shifts onto a higher temperature side, but a temperature of at most 1,300°C suffices. When the treating temperature is below 1,050°C, the sintering is insufficient. As the period of time for which the silica material is held at a predetermined temperature, up to 1 hour is usually sufficient, and no special advantage is brought forth even when the holding time exceeds 1 hour. In some cases, it is only required to raise the temperature within the treating temperature range (the holding time is nill). The reasons for the restriction of the temperature raising are the same as in the case of the step i).

It is desirable that the steps i)—v) are continuously performed without taking out the silica material into the atmospheric air. The silica material handled in the producing method of this invention is a substance whose specific surface area is very large. Therefore, when it is taken out into the atmospheric air, moisture and various gases in the atmospheric air are adsorbed in large quantities. When a specimen having once adsorbed the moisture etc. has its temperature raised again and is subjected to the treatment of the next step, cracks appear in the temperature raising process, or the adsorbed gases are confined in the pores of the specimen without being removed sufficiently. In the presence of the adsorbed gases confined in the pores, there occurs the inconvenience that bubbles are formed during the sintering treatment of the step v) or when the produced silica glass is heated to or above 1,300°C. Particularly in the porous silica material subjected to the hydroxyl group removal treatment of the step iii), chlorine used in the atmosphere gas exists in the form in which it is substituted for the hydroxyl group, so that the surfaces of the pores are very active. Accordingly, when the specimen is taken out into the atmospheric air, the inconvenient phenomenon occurs that the surfaces of the pores react with the moisture in the atmospheric air and that the concentration of hydroxyl groups in the specimen increases again. The porous silica material subjected to the chlorine removal treatment in the step iv) is in a favorable condition in which moisture, hydroxyl groups, chlorine etc. have been sufficiently removed. When the favorable silica material is taken out into the atmospheric air, it adsorbs moisture in the atmospheric air onto the surfaces of the pores. When the silica material having adsorbed the moisture is sintered by the step v), it becomes silica glass with the moisture confined therein, and bubbles are formed during the sintering treatment in an extreme case. Otherwise, when the produced silica glass is heated to or above 1,300°C for the working etc., the bubble formation is feared. Further, when the porous silica material having completed the step ii) is taken out into the atmospheric air, unfavorable phenoma thought to be caused by the adsorption of moisture, for example, the occurrence of cracks take place in the subsequent steps. Accordingly, it is desirable to continuously perform the steps i)—v). Especially the steps iii), iv) and v) ought to be continuously performed without taking out the specimen into the atmospheric air. Further, it is very desirable to continuously perform the steps ii) and iii).

All the steps i), ii), iii) and iv) above stated have the ranges of the appropriate treatment conditions specified and may be dealt with within the ranges. However, it is a considerably troublesome job to find out the most appropriate treatment conditions from both the qualitative viewpoint and the economical viewpoint, and they must be occasionally determined by the trial and error. Therefore, an expedient which permits this invention to be readily performed under such appropriate treatment conditions will be described below.

According to the expedient, in at least one of the steps i), ii), iii) and iv), the quantity of at least one gas constituting an exhaust gas is measured, and the measured value of the quantity of the gas is fed back to the treating condition in the step so as to control the step. Of course, a larger number of steps to be controlled is better, and it is the most desirable to control all the four steps. Concretely, (1) in the step i), the $H_2O$ content in the exhaust gas is measured, and the temperature raising rate is controlled with the measured value, (2) in the step ii), the $O_2$ content, the HCOOH content, the $H_2O$ content or the $CO_2$ content in the exhaust gas is measured, and the temperature raising rate is controlled with the measured value, (3) in the step iii), the HOCl content or the HCl content in the exhaust gas is measured, and the hydroxyl group removal treatment is ended when the measured gas becomes unobservable and (4) in the step iv), the $Cl_2$ content in the exhaust gas is measured, and the chlorine removal treatment is ended when the $Cl_2$ content becomes unobservable.

The silica glass manufactured by the method for producing silica glass according to this invention as above stated forms almost no bubbles and can be readily worked as predetermined even when heated to a high temperature of or above 1,300°C. Since it is quite free from the degradation of the transparency due to the bubble formation, it is suitable for silica glass for optical instruments. Further, it is especially suitable for a mother rod or an optical fiber because the residual OH content is very low. In addition, the manufacture of the silica glass is very easy.

Brief description of the drawings

Figure 1 is a schematic diagram showing the principal portions of a silica glass producing apparatus for use in an embodiment of this invention,

Figure 2 is a schematic diagram showing the principal portions of a silica glass producing apparatus for use in another embodiment of this invention, and

Figure 3 is a graph showing the relationship between the infrared transmission corresponding to moisture in an emitted gas and the lapsed time after initiation of temperature raising in the step of a water desorption treatment.

Description of the presently preferred embodiments
Example 1:

4.5 mols of $CH_3OH$ and 4 mols of $H_2O$ were added to 1 mol of $Si(OCH_3)_4$, and they were mixed sufficiently. The resultant solution (a sol) was put into a cylindrical vessel 8.5 mm in diameter and 250 mm in length to fill it to the extent of 80%, and it was turned into a gel by letting the vesse stand at 70°C with the top of the vessel tightly closed by an aluminum foil, a silver foil or any other cover. Since the gel in this state included therein large quantities of water and alcohol, a large number of pinholes each having a diameter of about 1 mm were provided in the tightly-closing top cover, whereby the water and alcohol were removed from within the gel very slowly. This drying was carried out at 70°C until the weight of the gel became approximately 1/5 of the initial value. The drying time was 7 days. By this treatment, the gel fell into the state in which the alcohol and water were mostly removed. This gel is the dry gel (in this case, its component is silica and hence it is a dry silica gel). The dry silica gel obtained had a size of approximately 4.3 mm in diameter and approximately 100 mm in length, a bulk density of approximately 1.0 gr/cm³ and a specific surface area of 800—900 m²/gr. The dry silica gel was stored in an oven or dryer at 70—100°C until the water desorption treatment to be described below was conducted.

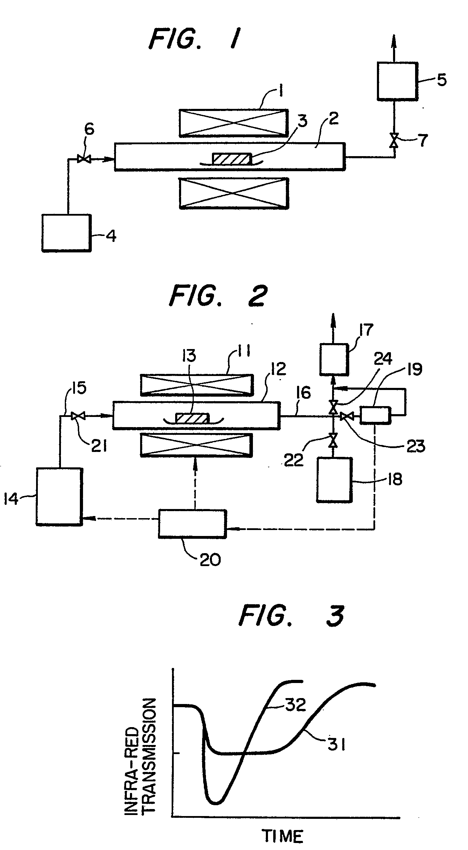

Figure 1 is a schematic diagram showing the principal protions of an apparatus for producing silica glass from the dry gel in this example. The dry gel was arranged as a specimen 3 in the central part of a reaction tube 2 in an electric furnace 1 shown in Figure 1. The inside diameter of the reaction tube 2 was 15 mm. First, oxygen gas ($O_2$) was introduced from a gas supplying portion 4 into the reaction tube 2 at a flow rate of 180 cc/min., and the exhaust gas was emitted into the atmospheric air through an exhaust gas purifier 5. Shown at 6 and 7 are gas cocks. Subsequently, while the oxygen gas was kept flowing as it was, the electric furnace 1 was energized, and the temperature was raised from the room temperature to approximately 250°C at a temperature raising rate of 100°C/hr. Then, the water desorption treatment was completed. The temperature as continuously raised up to 700°C at a temperature raising rate of 100°C/hr. in the same oxygen gas stream, and the specimen was held at 700°C for 30 minutes. Then, the carbon removal treatment was completed. Subsequently, besides the oxygen at 180 cc/min. used until then, chlorine ($Cl_2$) at a flow rate of 75 cc/min. was introduced from the gas supplying portion 4 into the reaction tube 2 so as to bring the interior of the tube into the oxygen atmosphere containing 33% of chlorine. The temperature was raised up to 900°C at a temperature raising rate of 50°C/hr., and was held at 900°C for 2 hours. Further, the temperature was raised up to 1,000°C at the same temperature raising rate of 50°C/hr. and was held at 1,000°C for 1 hour. Then, the hydroxyl group removal treatment was completed. Subsequently, the supply of the chlorine gas was stopped at 1,000°C. While introducing only the oxygen gas into the reaction tube 2 at the flow rate of 180 cc/min., the temperature was raised up to 1,050°C at a temperature raising rate of 50°C/hr. and was held at 1,050°C for 1 hour. Then, the chlorine removal treatment was completed. After the completion of the chlorine removal treatment, the supply of the oxygen gas was stopped at 1,050°C. While introducing helium gas (He) at a flow rate of 300 cc/min. into the reaction tube 2 instead of the oxygen gas, the temperature wjs raised up to 1,300°C at a temperature raising rate of 50°C/hr. Then, the sintering treatment was completed. The electric furnace 1 was deenergized, and the specimen was cooled in the furnace while the helium gas was kept flowing as it was. The water desorption treatment and the subsequent steps described above were continously performed, and the speciment was not taken out halfway.

The silica glass obtained was transparent, and did not include abnormalities such as cracks. When a part of the specimen was cut out and had its hydroxyl group concentration measured by the IR spectroscopy, the hydroxyl group concentration was 7.4 ppm. Although the silica glass was heated to a high temperature of or above 1,300°C to be molten, abnormalities such as bubbles did not appear. When the silica glass was intensely heated with an oxyhydrogen burner, a very slight bubble formation was noted, but it was to the extent that no problem would be posed in practical use. The Cl content of the specimen was 0.7 weight-%.

Reference Example 1:

Silica glass was produced by the same processings as in Example 1 except that after the completion of the hydroxyl group removal treatment, the supply of the chlorine gas is stopped at 1,000°C and that while introducing only the helium gas into the reaction tube at the flow rate of 300 cc/min., the temperature was raised up to 1,300°C at the temperature raising rate of 50°C/hr., in other words, that the chlorine removal treatment was omitted.

The silica glass obtained was transparent, and did not include abnormalities such as cracks. However, when it was heated at the high temperature of or above 1,300°C to be fused, a marked bubble formation was noted. The bubble was subjected to a gas analysis, and was found to be made of a gas whose principal component was $SiCl_4$. In this manner, in the case where the step of the chlorine removal treatment is omitted, a favorable result is not attained.

Reference Example 2:

Silica glass was produced by the same process as in Example 1 except that after the completion of the hydroxyl group removal treatment, the specimen was cooled down to the room temperature in the helium gas atmosphere in the furnace and was taken out into the atmospheric air at a relative humidity of 60%, that after the specimen was let stand for 1 hour, it was arranged in the central part of the reaction tube 2 again, and that while introducing helium gas at a flow rate of 300 cc/min. into the reaction tube 2, the temperature was raised up to 1,000°C at a temperature raising rate of 300°C/hr. This experiment was conducted twice, and the specimens of the silica glass obtained were opaque due to the bubble formation in both the cases.

Reference Example 3:

Silica glass was produced by the same process as in Example 1 except that after the completion of the hydroxyl group removal treatment, a specimen was cooled down to the room temperature in a helium gas atmosphere while it was left within the reaction tube in the electric furnace, and that after the specimen was held at the room temperature in the helium gas atmosphere a whole day or night, it had its temperature raised up to 1,000°C at a temperature raising rate of 300°C/hr. in the helium gas atmosphere again.

The silica glass obtained was excellent, similar to the silica glass produced in Example 1.

It has accordingly been revealed that even when the specimen is cooled down to the room temperature after the completion of the hydroxyl group removal treatment, a favorable result is attained unless the specimen is exposed into the atmospheric air. Such treatment, however, merely incurs the increase of the cost ordinarily.

Reference Example 4:

Silica glass was produced by the same process as in Example 1 except that after the completion of the carbon removal treatment, a specimen was cooled down to the room temperature in the furnace and was taken out into the atmospheric air at a relative humidity of 60%, that after the specimen was let stand for 1 hour, it was arranged in the central part of the reaction tube 2 again, and that while introducing oxygen at a flow rate of 180 cc/min. into the reaction tube 2, the temperature was raised up to 700°C at a temperature raising rate of 300°C/hr. When this experiment was conducted five times, the presence of cracks was noted in the specimens of the produced silica glass in two cases, but no abormality was noted in the other three cases.

Accordingly, the silica material subjected to the carbon removal treatment should more preferably be continuously subjected to the next treatment step without being taken out into the atmospheric air. When it is inevitably required to separately store the specimen, the specimen is stored in, for example, a dry gas current whereby the adsorption of water can be minimized.

Example 2:

Figure 2 is a schematic diagram showing the principal portions of an apparatus for producing silica glass from a dry gel in the present example and Examples 3, 4 and 5. A dry gel obtained in the same way as in Example 1 was arranged as a specimen 13 in the central part of a reaction tube 12 in an electric furnace 11 shown in Figure 2. The inside diameter of the reaction tube 12 was 15 mm. The dry gel employed had been stored in the air at the room temperature, and it had a size of approximately 4.3 mm in diameter and approximately 100 mm in length, a bulk density of approximately 1.0 $gr/cm^3$ and a specific surface area of 800—900 $m^2/gr$. First, oxygen was introduced from a gas supplying portion 14 into the reaction tube 12 at a flow rate of 200 cc/min., and the exhaust gas was emitted into the atmospheric air through an exhaust pipe 16 and an exhaust gas purifier 17. The atmosphere gas was supplied from the gas supplying portion 14 to the reaction tube through an introduction pipe 15. Here, the flow rate of oxygen needs to be such that vaporized water is not condensed downstream of the reaction portion. The electric furnace 11 was energized, and while raising the temperature of the furnace from the room temperature at a rate of about 300°C/hr., the infrared transmission of the exhaust gas was measured. Then, an infrared transmission factor corresponding to the vibration wave number of the water molecule, 3,600 $cm^{-1}$ began to abruptly decrease at a temperature near 100°C, and the temperature raising rate was lowered to 0°C/hr. (that is, the temperature was held near 100°C). Thereafter, the temperature raising rate was gradually increased or decreased so that the infrared transmission factor might hold approximately 50%. The measurement of the infrared transmission was made with an infrared spectrometer installed on a gas composition analyzing portion 19. Since the infrared transmission began to rise from approximately 200°C irrespective of the increase or decrease of the temperature raising rate, the temperature was raised at the temperature raising rate of 300°C/hr. again. Then, the rise of the infrared transmission became unobserved at approximately 250°C, and the completion of the water desorption treatment was known. The above variation of the infrared transmission is shown at a curve 31 in Figure 3. The axis of ordinates in Figure 3 represents the infrared transmission, while the axis of abscissas represents the lapsed time after the initiation of the temperature raising, both the axes being of arbitrary units. When the specimen was taken out of the reaction tube 12 and examined, abnormalities such as cracks were not noted.

For comparison's sake, the same dry gel had its temperature raised from the room temperature to 250°C at a fixed temperature raising rate of approximately 300°C/hr. in an oxygen gas stream at a flow rate of 200 cc/min., and the variation of the infrared transmission was examined. Then, as a result shown at a curve 32 in Figure 3 was obtained. When this comparative specimen was taken out of the reaction tube and examined, cracks in several places were observed.

As apparent from the example, the water content in the exhaust gas is detected and is fed back to the temperature raising rate, whereby the water desorption treatment can be reliably completed. Although, in the example, the manual control was made, it is needless to say that the reproducibility is further enhanced by making an automatic program control. In this case, a detection signal issued from the infrared spectrometer in the gas composition analyzing portion 19 is transmitted to a program controller 20 and is fed back to a furnace temperature in accordance with a progam. In Figure 2, numeral 18 indicates a vacuum pump which is used in the case of heat-treating the specimen in vacuum, and numerals 21, 22, 23 and 24 indicate gas cocks.

The subsequent steps were carried out in the same manner as in Example 1, to produce silica glass. The silica glass obtained was excellent likewise to that in Example 1.

Example 3:

A specimen having completed the water desorption treatment in the same way as in Example 2 had its temperature raised at a temperature raising rate of 100°C/hr. as it was. Then, an infrared transmission factor corresponding to HCOOH began to decrease suddenly at a temperature near 300°C, and the detection amount of HCOOH increased rapidly. There-fore, the temperature raising rate of 300—400°C was regulated so that the infrared transmission factor might hold approximately 50%. The measurement of the infrared transmission was made by means of the infrared spectrometer installed on the gas composition analyzing portion 19. The gas composition analyzing portion 19 was also provided with a mass filter, which was used simultaneously with the infrared spectrometer. The measurements of the quantitites of reaction products in the exhaust gas were made on $H_2O$ and $CO_2$ as well as on HCOOH referred to above. From 400°C, the temperature was raised up to 700°C at a fixed temperature raising rate of 100°C/hr. Both the infrared spectrometer and the mass filter indicated substantially the same results, and it was conformed that the carbon removal treatment was substantially completed between 600°C and 700°C. Thereafter, the specimen was taken out of the reaction tube 12 and was examined, and abnormalities such as cracks were not noted.

The present example attained the favorable result by feeding the result of the gas analysis back to the temperature raising rate. However, in case where the gas to be introduced into the reaction tube 12 with a mixed gas consisting of oxygen and an inert or neutral gas, a similar favorable result was obtained by feeding the result of the gas analysis back to the concentration of oxygen in the atmosphere gas.

In general, an organic compound remaining in the dry silica gel is oxidized and removed in an oxygen atmosphere at a temperature of or above 250°C, and the reaction proceeds abruptly at near 300°C. Accordingly, in case where the temperature is raised at a comparatively high temperature-raising rate without controlling the temperature raising rate, a specimen is often cracked or broken. The present example has indicated an example of an expedient for preventing the drawback.

The subsequent steps were carried out similarly to those of Example 1, to produce silica glass. The silica glass obtained was an excellent as in Example 1.

Example 4:

A specimen having completed the carbon removal treatment in the same way as in Example 3 was cooled down to the room temperature in the oxygen atmosphere in the furnace as it was. Thereafter, the temperature was raised from the room temperature to 700°C at a temperature raising rate of 300°C/hr. in an oxygen gas stream at a flow rate of 180 cc/min. At 700°C, besides the oxygen at 180 cc/min. supplied until then, chlorine at a flow rate of 75 cc/min. was introduced into the reaction tube 12 so as to bring the interior of the tube into an oxygen atmosphere containing 33% of chlorine, whereupon the temperature was raised up to 1,000°C at a temperature raising rate of 60°C/hr. When the exhaust gas to be emitted through the exhaust pipe 16 was analyzed by the mass filter installed on the gas composition analyzing portion 19, HOCl, HCl etc. were detected as reaction products. These products increased with the lapse of time at first. However, when the temperature was held constant at 1,000°C, the reaction products decreased gradually. When the holding time at 1,000°C became about 1 hour, the reaction products became undetected, and the completion of the hydroxyl group removal treatment was known.

Using another specimen having completed the carbon removal treatment in the same way as in Example 3, the same experiment as described above was conducted. As a result, the holding time at 1,000°C in which the reaction products such as HOCl and HCl became undetected was 2.5 hours.

As understood from the above example, the circumstances of the proceeding of the hydroxyl group removing reaction vary depending upon the specimens, but a necessary and sufficient treatment of removing hydroxyl groups is always permitted by monitoring the reaction products. In case where the hydroxyl group removal is not sufficiently executed, bubbles are formed in the silica glass in the subsequent stage of the sintering treatment, or the silica glass becomes unusable for a mother rod for an optical fiber as must be low in the content of hydroxyl groups. On the other hand, when the hydroxyl group removal becomes excessive, the content of chlorine in the silica glass increases, which forms a cause for the occurrence of cracks. Accordingly, it is desirable to perform the hydroxyl group removing treatment to the necessary and sufficient extent, and the application of the method of this invention described in the present example is recommended therefor.

Silica glass was produced by carrying out the subsequent steps in the same way as in Example 1. The silica glass obtained was as excellent as in Example 1.

Example 5:

A specimen having completed the hydroxyl group removal treatment in the same manner as in Example 4 was not taken out into the atmospheric air, and the atmosphere gas was charged-over to helium gas at a flow rate of 300 cc/min. at 1,000°C. While holding the temperature at 1,000°C as it was, the concentrations of chlorine ($Cl_2$) gas and oxygen ($O_2$) gas were measured with the mass filter disposed in the gas composition analyzing portion 19. Then, after 30 minutes, these gas concentrations lowered below detection sensitivities, and $SiCl_4$ was slightly detected. At this stage, the introduction of the helium gas was stopped, and oxygen at a flow rate of 180 cc/min. was introduced from the gas supplying portion 14 into the reaction tube 12 instead. The temperature was raised up to 1,050°C at a temperature raising rate of 50°C/hr., and was held at this point. As a result, $Cl_2$ gas began to be detected in the mass filter. However, when the temperature was held at 1,050°C for 1 hour, the $Cl_2$ gas concentration became below the detection sensitivity again. While holding the temperature at 1,050°C, the atmosphere gas was changed-over from oxygen to helium gas at a flow rate of 300 cc/min. Then, in 30 minutes after the change-over, the concentration of oxygen gas in the exhaust gas became below the detection sensitivity. At this time, the temperature was raised up to 1,200°C at a temperature raising rate of 50°C/hr. with the helium gas atmosphere kept unchanged. After holding the temperature at 1,200°C for 1 hour, the heating power source of the electric furnace 11 was turned off. The specimen was cooled down to the room temperature in the furnace while the helium gas was kept flowing, and it was taken out of the reaction tube 12 and investigated. Then, abnormalities such as cracks and bubbles were not noted, and the specimen was a transparent glass rod. A part of the specimen was cut to a thickness of approximately 2 mm and was polished, whereupon the quantity of hydroxyl groups contained in the specimen was measured by the IR spectroscopy. Then, it was below 10 ppm. When the transparent glass rod obtained was intensely heated and molten with an oxyhydrogen burner, abnormalities such as the formation of bubbles did not occur, and the rod could satisfactorily endure the use as the mother glass rod for an optical fiber.

Example 6:

Specimens of silica glass were produced in the same manner as in Example 1 except that in the chlorine removal treatment, temperatures at which the specimens were held in an oxygen stream for 1 hour were made 980°C, 1,100°C and 1,150°C. The specimens of the silica glass obtained were transparent, and did not include abnormalities such as cracks. However, when these specimens of the silica glass were intensely heated with an oxyhydrogen burner (the reading of an optical pyrometer became approximately 1,500°C), both the specimens held at 980°C and at 1,150°C formed bubbles and could not attain favorable results, whereas the specimen held at 1,100°C did not form a bubble and could attain a favorable result. The contents of Cl in the specimens were 1.2 weight-%, 0.5 weight-% and 0.1 weight-% for the holding temperatures of 980°C, 1,100°C and 1,150°C in the chlorine removal treatment, respectively. Accordingly, in case where the heat-treatment temperature at which the specimen is held in the oxygen stream for 1 hour is lower than 1,000°C, unfavorably the chlorine removal effect is scanty and the produced silica glass sometimes forms bubbles when heated to high temperatures. On the other hand, in case where the heat-treatment temperature is 1,150°C or so, that is, it exceeds approximately 1,100°C, the chlorine removal effect rises, but unfavorably the oxygen gas is confined in closed pores and the silica glass sometimes forms bubbles when heated to high temperatures.

Accordingly, the heat-treating temperature in the oxygen gas stream in the step of the chlorine removal treatment is 1,000—1,100°C appropriately.

Obviously many modifications and variations of the present invention are possible in the light of the above teachings. It is therefore to be understood that within the scope of the appended claims the invention may be practiced otherwise than as specifically described.

**Claims**

1. A method for producing silica glass comprising:

i) the step of heating a silica material made of a dry silica gel and raising its temperature to approximately 250°C, to perform a water desorption treatment,

ii) the step of heating the silica material having undergone said water desorption treatment and raising its temperature to approximately 700°C in an oxidizing atmosphere, to perform a carbon removal treatment, iii) the step of heating the silica material having undergone said carbon removal treatment and raising its temperature from approximately 700°C to a value within the range of approximately 1,000°C—approximately 1,050°C in an atmosphere containing at least 1 vol.% of $Cl_2$, chloride gas or a gas adapted to generate $Cl_2$ upon thermal decomposition, to perform a hydroxyl group removal treatment characterized by the subsequent steps:

iv) the step of heating the silica material having undergone said hydroxyl group removal treatment to a temperature of approximately 1,000°C—approximately 1,100°C in an atmosphere containing at least 1 vol.% of oxygen and holding said silica material at a predetermined temperature for at most 2 hours, to perform a chlorine removal treatment, and

v) the step of heating the silica material having undergone said chlorine removal treatment to a temperature of approximately 1,050°C—approximately 1,300°C in He or in vacuum and holding said silica material at a predetermined temperature chosen within said temperature range from about 1,050°C to about 1,300°C for at most 1 hour, to perform a sintering treatment.

2. A method for producing silica glass as defined in claim 1, characterized in that a temperature raising rate in said step iii) is 30—100°C/hr.

3. A method for producing silica glass as defined in claim 1, characterized in that a temperature raising rate in said step iii) is 50—60°C/hr.

4. A method for producing silica glass as defined in claim 1, characterized in that said atmosphere in said step iii) is a mixed gas consisting of 5—50 vol.% of $Cl_2$ and the balance of $O_2$.

5. A method for producing silica glass as defined in claim 1, characterized in that in said step iii), a treatment of holding the silica material at a predetermined temperature for at most approximately 2 hours is performed at least once.

6. A method for producing silica glass as defined in claim 1, characterized in that in said step iv), the silica material is held at the predetermined temperature of approximately 1,000°C—approximately 1,100°C for 1—2 hours.

7. A method for producing silica glass as defined in any of the claims 1 to 6, characterized in that said atmosphere in said step iv) is pure $O_2$ or He containing at least 5 vol.% of oxygen.

8. A method for producing silica glass as defined in any of the claims 1 to 6, characterized in that in said step v), the silica material has its temperature raised to the predetermined temperature at a temperature raising rate of 50°C—100°C/hr.

9. A method for producing silica glass as defined in claim 1, characterized in that in said steps iii) and iv), the silica material is subjected to the next step without being exposed to atmospheric air after end of said each step.

10. A method for producing silica glass as defined in claim 1, characterized in that in said steps ii), iii), and iv), the silica material is subjected to the next step without being exposed to atmospheric air after end of said each step.

11. A method for producing silica glass as defined in claim 1, characterized in that in at least one of said steps i), ii), iii) and iv), a quantity of at least one gas constituting an exhaust gas is measured, a measured value of the gas quantity being fed back to a treatment condition in the step so as to control said step.

12. A method for producing silica glass as defined in claim 11, characterized in that in said step i), a quantity of $H_2O$ in the exhaust gas is measured, a measured value thereof being used to control a temperature raising rate.

13. A method for producing silica glass as defined in claim 11, characterized in that in said step ii), a quantity of $O_2$, a quantity of HCOOH, a quantity of $H_2O$ or a quantity of $CO_2$ in the exhaust gas is measured, a measured value thereof being used to control a temperature raising rate.

14. A method for producing silica glass as defined in claim 11, characterized in that in said step iii), a quantity of HOCl or a quantity of HCl in the exhaust gas is measured, said hydroxyl group removal treatment being ended when the measured gas becomes unobservable.

15. A method for producing silica glass as defined in claim 11, characterized in that in said step iv), a quantity of $Cl_2$ in the exhaust gas is measured, said chlorine removal treatment being ended when the $Cl_2$ quantity becomes unobservable.

**Patentansprüche**

1. Verfahren zur Herstellung von Kieselglas mit folgenden Verfahrensschritten:

I) Erhitzen eines aus trockenem Silikagel hergestellten Silika-Materials und Erhöhen seiner Temperatur auf ungefähr 250°C, um eine Wasserdesorptionsbehandlung auszuführen,

II) Erhitzen des der Wasserdesorptionsbehandlung unterzogenen Silika-Materials und Erhöhen seiner Temperatur auf etwa 700°C in einer oxidierenden Atmosphäre, um eine Behandlung zur Entfernung von Kohlenstoff auszuführen,

III) Erhitzen des Silika-Materials, das der Behandlung zur Kohlenstoffentfernung unterzogen worden ist, und Erhöhen seiner Temperatur von etwa 700°C auf einen Wert im Bereich von etwa 1000°C bis etwa 1050°C in einer Atmosphäre, die wenigstens 1 Volumen-% an $Cl_2$, gasförmigen Chlorid oder eines Gases enthält, das geeignet ist, bei thermischer Zersetzung $Cl_2$ zu erzeugen, um damit eine Behandlung zur Entfernung von Hydroxylgruppen auszuführen, gekennzeichnet durch die nachfolgenden Verfahrensschritte:

IV) Erhitzen des Silika-Materials, das der Behandlung zur Entfernung von Hydoxylgruppen unterzogen worden ist, auf eine Temperatur von etwa 1000°C bis etwa 1100°C in einer Atmosphäre, die wenigstens 1 Volumen-% an Sauerstoff enthält, und Verweilenlassen dieses Silika-Materials bei einer vorgegebenen Temperatur für höchstens 2 Stunden, um eine Behandlung zur Entfernung von Chlor auszuführen, und

V) Erhitzen des Silika-Materials, das der Behandlung zur Entfernung von Chlor unterzogen worden ist, auf eine Temperatur von etwa 1050°C bis etwa 1300°C in He oder im Vakuum und Verweilenlassen dieses Silika-Materials bei einer vorgegebenen Temperatur, die innerhalb des Temperaturbereiches von etwa 1050°C bis etwa 1300°C gewählt wird, für höchstens eine Stunde, um eine Sinterbehandlung auszuführen.

2. Verfahren zur Herstellung von Kieselglas nach Anspruch 1, dadurch gekennzeichnet, daß die Anstiegsgeschwindigkeit der Temperatur in dem Verfahrensschritt III) 30—100°C/Stunde beträgt.

3. Verfahren zur Herstellung von Kieselglas nach Anspruch 1, dadurch gekennzeichnet, daß die Anstiegsgeschwindigkeit der Temperatur im Verfahrensschritt III) 50—60°C/Stunde beträgt.

4. Verfahren zur Herstellung von Kieselglas nach Anspruch 1, dadurch gekennzeichnet, daß die Atmosphäre beim Verfahrensschritt III) ein Mischgas ist, das aus 5 bis 50 Volumen-% an $Cl_2$ und im übrigen aus $O_2$ besteht.

5. Verfahren zur Herstellung von Kieselglas nach Anspruch 1, dadurch gekennzeichnet, daß bei dem Verfahrensschritt III) der Schritt des Verweilenlassens des Silika-Materials bei einer vorgegebenen Temperatur für höchstens etwa 2 Stunden wenigstens einmal ausgeführt wird.

6. Verfahren zur Herstellung von Kieselglas nach Anspruch 1, dadurch gekennzeichnet, daß in dem Verfahrensschritt IV) das Silika-Material bei einer vorgegebenen Temperatur von etwa 1000°C bis etwa 1100°C für 1 bis 2 Stunden gehalten wird.

7. Verfahren zur Herstellung von Kieselglas nach einem der Ansprüche 1 bis 6, dadurch gekennzeichnet, daß bei dem Verfahrensschritt IV) die Atmosphäre reiner $O_2$ oder He ist, welches 5 Volumen-% an Sauerstoff enthält.

8. Verfahren zur Herstellung von Kieselglas nach einem der Ansprüche 1 bis 6, dadurch gekennzeichnet, daß bei dem Verfahrensschritt V) die Temperatur des Silika-Materials auf eine vorgegebene Temperatur mit einer Anstiegsgeschwindigkeit der Temperatur von 50—100°C/Stunde erhöht wird.

9. Verfahren zur Herstellung von Kieselglas nach Anspruch 1, dadurch gekennzeichnet, daß bei den Verfahrensschritten III) und IV) das Silika-Material dem nächsten Schritt unterworfen wird ohne nach dem Ende eines jeden dieser Schritte atmosphärischer Luft ausgesetzt worden zu sein.

10. Verfahren zur Herstellung von Kieselglas nach Anspruch 1, dadurch gekennzeichnet, daß bei den Verfahrensschritten II), III) und IV) das Silika-Material dem nächsten Schritt unterworfen wird ohne nach dem Ende eines jeden dieser Schritte atmosphärischer Luft ausgesetzt worden zu sein.

11. Verfahren zur Herstellung von Kieselglas nach Anspruch 1, dadurch gekennzeichnet, daß bei wenigstens einem der Verfahrensschritte I), II), III) und IV) die Menge von wenigstens einem Gas, welches ein Abgas darstellt, gemessen wird, wobei ein Meßwert der Gasmenge auf eine Behandlungsbedingung des Verfahrensschrittes rückwirkt um dem Verfahrensschritt zu steuern.

12. Verfahren zur Herstellung von Kieselglas nach Anspruch 11, dadurch gekennzeichnet, daß bei dem Verfahrensschritt I) die Menge von $H_2O$ in dem Abgas gemessen wird und daß ein Messwert davon zur Steuerung der Anstiegsgeschwindigkeit der Temperatur verwendet wird.

13. Verfahren zur Herstellung von Kieselglas nach Anspruch 11, dadurch gekennzeichnet, daß bei dem Verfahrensschritt II) die Menge an $O_2$, die Menge an HCOOH, die Menge an $H_2O$ oder die Menge an $CO_2$ im Abgas gemessen wird und daß der Messwert davon zur Steuerung der Anstiegsgeschwindigkeit der Temperatur verwendet wird.

14. Verfahren zur Herstellung von Kieselglas nach Anspruch 11, dadurch gekennzeichnet, daß bei dem Verfahrensschritt III) die Menge an HOCl oder die Menge an HCl im Abgas gemessen wird, wobei die Behandlung zur Entfernung von Hydroxylgruppen beendet wird, wenn das gemessene Gas unbeobachtbar wird.

15. Verfahren zur Herstellung von Kieselglas nach Anspruch 11, dadurch gekennzeichnet, daß bei dem Verfahrensschritt IV) die Menge an $Cl_2$ im Abgas gemessen wird, wobei die Behandlung zur Entfernung von Chlor beendet wird, wenn die Menge an $Cl_2$ unbeobachtbar wird.

## Revendications

1. Procédé pour fabriquer du verre quartzeux, incluant:

i) la phase opératoire de chauffage d'un matériau formé de silice et constitué par un gel de silice, et l'accroissement de sa température jusqu'à environ 250°C de manière à réaliser un traitement de désorption de l'eau, ii) la phase opératoire de chauffage du matériau formé de silice ayant subi ledit traitement de désorption de l'eau, et d'acroissement de sa température jusqu'à environ 700°C dans une atmosphère oxydante pour réaliser un traitement d'élimination du carbone,

iii) la phase opératoire de chauffage du matériau formé de silice ayant subi ledit traitement d'élimination du carbone, et d'accroissement de sa température depuis environ 700°C jusqu'à une valeur située dans la gamme comprise entre environ 1000°C et environ 1050°C dans une atmosphère contenant au moins 1% en volume de $Cl_2$, d'un chlorure gazeux ou d'un gaz apte produire du $Cl_2$ lors de sa décomposition thermique, de manière à effectuer un traitement d'élimination des groupes hydroxyles, caractérisé par les phases opératoires ultérieures suivantes:

iv) la phase opératoire de chauffage du matériau formé se silice, ayant subi ledit traitement d'élimination des groupes hydroxyles, jusqu'à une température comprise entre environ 1000°C et environ 1100°C dans une atmosphère contenant au moins 1% en volume d'oxygène, et de maintien dudit matériau formé de silice à une température prédéterminée pendant tout au plus 2 heures de manière à réaliser un traitement d'élimination du chlore, et

v) la phase opératoire de chauffage du matériau formé de silice ayant subi ledit traitement d'élimination du chlore jusqu'à une température comprise entre environ 1050°C et environ 1300°C dans du He ou sous vide, et le maintien dudit matériau formé de silice à une température prédéterminée choisie dans ladite gamme de températures comprise entre environ 1050°C et environ 1300°C pendant tout au plus 1 heure de manière à réaliser un traitement de frittage.

2. Procédé de fabrication de verre quartzeux tel défini dans la revendication 1, caractérisé en ce qu'un taux de croissance de la température lors de ladite phase opératoire iii) est compris entre 30—100°C/h.

3. Procédé de fabrication de verre quartzeux tel que défini dans la revendication 1, caractérisé en ce qu'un taux de croissance de la tem-

**0 032 594**

pérature lors de ladite phase opératoire iii) est compris entre 50 est 60°C/h.

4. Procédé de fabrication de verre quartzeux tel que défini dans la revendication 1, caractérisé en ce que ladite atmosphère lors de la phase opératoire iii) est un gaz mixte constitué par 5—50% en volume de $Cl_2$ et le reste en $O_2$.

5. Procédé de fabrication de verre quartzeux tel que défini dans la revendication 1, caractérisé en ce que dans ladite phase opératoire iii), un traitement de maintien du matériau formé par la silice à une température prédéterminée pendant tout au plus environ 2 heures est effectué au moins une fois.

6. Procédé de fabrication de verre quartzeux tel que défini dans la revendication 1, caractérisé en ce que dans ladite phase opératoire iv), le matériau formé de silice est maintenu à la température prédéterminée d'environ 1000°C—environ 1100°C pendant 1—2 heures.

7. Procédé de fabrication de verre quartzeux tel que défini dans l'une des revendications 1 à 6, caractérisé en ce que ladite atmosphère lors de ladite phase opératoire iv) est du $O_2$ pour ou du He contenant au moins 5% en volume d'oxygène.

8. Procédé de fabrication de verre quartzeux tel que défini dans l'une des revendications 1 à 6, caractérisé en ce que lors de ladite phase opératoire v), la température du matériau formé par la silice est accrue à la température prédéterminée avec un taux de croissance de la température de 50°C—100°C/h.

9. Procédé de fabrication de verre quartzeux tel que défini dans la revendication 1, caractérisé en ce que lors des phases opératoires iii) et iv), la matériau formé par la silice est soumis à la phase opératoire suivante sans être exposé à l'aire atmosphérique à la fin de chacune desdites phases opératoires.

10. Procédé de fabrication de verre quartzeux tel que défin dans la revendication 1, caractérisé en ce que lors desdites phases opératoires ii), iii) et iv), le matériau formé de silice est soumis à la phase opératoire suivante sans être exposé à une air atmosphérique à la fin de chacune des phases opératoires.

11. Procédé de fabrication de verre quartzeux tel que défin dans la revendication 1, caractérisé en ce que dans au moins l'une desdites phases opératoires i), ii), iii), et iv), on mesure une quantité d'au moins un gaz constituant un gaz de sortie, une valeur de mesure de la quantité de gaz agissant par réaction sur un état de traitement lors de la phase opératoire de manière à commander cette dernière.

12. Procédé de fabrication de verre quartzeux tel que défini dans la revendication 11, caractérisé en ce que lors de ladite phase opératoire i), on mesure une quantité de $H_2O$ dans le gaz de sortie, une valuer me surée de cette quantité étant utilisée pour commander un taux de croissance de la température.

13. Procédé de fabrication de verre quartzeux tel que défini dans la revendication 11, caractérisé en ce que lors de la phase opératoire ii), on mesure une quantité de $O_2$, une quantité de HCOOH, une quantité de $H_2O$ ou une quantité de $CO_2$ dans le gaz de sortie, une valeur mesurée de cette quantité étant utilisée pour commander un taux croissance de la température.

14. Procédé de fabrication de verre quartzeux tel que défini dans la revendication 11, caractérisé en ce que pendant ladite phase opératoire iii) on mesure une quantité de HOCCL ou une quantité de HCl dans le gaz de sortie, ledit traitement d'élimination des groupes hydroxyles étant terminé lorsque le gaz mesuré ne peut plus être décelé.

15. Procédé de fabrication de verre quartzeux tel que défini dans la revendication 11, caractérisé en ce que lors de ladite phase opératoire iv), une quantité de $Cl_2$ dans le gaz de sortie, ledit traitement d'élimination du chlore étant terminé lorsque la quantité de $Cl_2$ ne peut plus être décelée.

0 032 594

FIG. 1

FIG. 2

FIG. 3

INFRA-RED TRANSMISSION

TIME

1